# EUROPEAN PATENT APPLICATION

(11) **EP 4 039 743 A1**
(43) Date of publication of application: **10.08.2022**
(21) Application number: 20870985.7
(22) Date of filing: 25.09.2020
(51) Int. Cl.: C08L 53/02, H01M 4/62

(54) **BINDER COMPOSITION FOR NONAQUEOUS SECONDARY BATTERIES, METHOD FOR PRODUCING SAME, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(30) Priority: 30.09.2019 JP 2019180112
(71) Applicant: Zeon Corporation, Tokyo 100-8246 (JP)
(72) Inventor: MATSUMURA, Taku, Tokyo 100-8246 (JP)
(74) Representative: Parchmann, Stefanie
(86) International application number: PCT/JP2020/036412
(87) International publication number: WO 2021/065742

(57) **Abstract**

A binder composition for a non-aqueous secondary battery contains specific polymer particles. The polymer particles contain a polymer 1 that is a block polymer including an acidic group-containing monomer unit and a polymer 2 that does not include an acidic group-containing monomer unit. The polymer 1 constitutes a proportion of not less than 10 mass% and not more than 90 mass% in the polymer particles. The polymer 2 includes either or both of an aliphatic conjugated diene monomer unit and an alkylene structural unit. The aliphatic conjugated diene monomer unit and the alkylene structural unit constitute a total proportion of 55 mass% or more based on the total mass of all repeating units included in the polymer 2.

## Description

### TECHNICAL FIELD

The present disclosure relates to a binder composition for a non-aqueous secondary battery and method of producing the same, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

There have previously been instances in which polymer particles that contain a polymer including a block region formed of a specific monomer unit have been used as a binder contained in a binder composition. As one example, Patent Literature (PTL) 1 discloses using a cyclohexane solution of a block polymer into which a graft portion of linked methacrylic acid units has been introduced in order to obtain a water dispersion of polymer particles that contain a block polymer including a methacrylic acid unit in a graft portion and also discloses a binder composition for a non-aqueous secondary battery containing this water dispersion, a water-soluble polymer that includes a hydrophilic group and has a weight-average molecular weight within a specific range, and water.

### CITATION LIST

### Patent Literature

PTL 1: WO2019/039560A1

### SUMMARY

### (Technical Problem)

In recent years, increased close adherence between an electrode mixed material layer and a current collector (i.e., increased electrode peel strength) and increased viscosity stability of a slurry composition used to form an electrode mixed material layer have been required for the purpose of producing secondary batteries having even higher performance.

However, there is room for improvement of the viscosity stability of a slurry composition for an electrode that is formed using the conventional binder composition described above. There is also room for further improvement of the peel strength of an electrode that is formed using the conventional binder composition described above.

Accordingly, one object of the present disclosure is to provide a binder composition for a non-aqueous secondary battery with which it is possible to form a slurry composition for a non-aqueous secondary battery electrode having excellent viscosity stability and an electrode for a non-aqueous secondary battery having excellent peel strength.

Another object of the present disclosure is to provide a slurry composition for a non-aqueous secondary battery electrode that has excellent viscosity stability and can form an electrode for a non-aqueous secondary battery having excellent peel strength.

Yet another object of the present disclosure is to provide an electrode for a non-aqueous secondary battery that has excellent peel strength and a non-aqueous secondary battery that includes this electrode for a non-aqueous secondary battery.

### (Solution to Problem)

The inventor conducted diligent investigation with the aim of solving the problem set forth above. The inventor conceived an idea of including, in a binder composition, polymer particles that contain two types of polymers having different properties to each other. The inventor discovered that in a case in which one of the polymers contained in the polymer particles in the binder composition is a block polymer that includes an acidic group-containing monomer unit and the other of the polymers is a polymer that does not include an acidic group-containing monomer unit and in which the total proportional content of an aliphatic conjugated diene monomer unit and an alkylene structural unit is not less than a specific value, it is possible to form a slurry composition for a non-aqueous secondary battery electrode having excellent viscosity stability and an electrode for a non-aqueous secondary battery having excellent peel strength, and, in this manner, completed the present disclosure.

Specifically, the present disclosure aims to advantageously solve the problem set forth above, and a presently disclosed binder composition for a non-aqueous secondary battery comprises polymer particles, wherein the polymer particles contain a polymer 1 that is a block polymer including an acidic group-containing monomer unit and a polymer 2 that does not include an acidic group-containing monomer unit, the polymer 1 constitutes a proportion of not less than 10 mass% and not more than 90 mass% based on total mass of the polymer 1 and the polymer 2, the polymer 2 includes either or both of an aliphatic conjugated diene monomer unit and an alkylene structural unit, and the aliphatic conjugated diene monomer unit and the alkylene structural unit constitute a total proportion of 55 mass% or more based on total mass of all repeating units included in the polymer 2. By using a binder composition containing polymer particles that contain the specific polymers 1 and 2 set forth above in a specific ratio in this manner, it is possible to form a slurry composition for a non-aqueous secondary battery electrode having excellent viscosity stability and an electrode for a non-aqueous secondary battery having excellent peel strength.

Note that a "monomer unit" of a polymer is a "repeating unit derived from the monomer that is included in a polymer obtained using the monomer". Also note that the "proportional content (mass%)" of each repeating unit in a polymer that is referred to in the present disclosure can be measured using a nuclear magnetic resonance (NMR) method such as ¹H-NMR.

Moreover, the proportion constituted by the polymer 1 based on the total mass of the polymer 1 and the polymer 2 can be measured by a method in which separation and quantification are performed using electrical charge difference, such as by normal phase chromatography.

In the presently disclosed binder composition for a non-aqueous secondary battery, it is preferable that the polymer 1 includes a main chain that includes a block region formed of an aromatic vinyl monomer unit and a graft portion that is bonded to the main chain, the aromatic vinyl monomer unit constitutes a proportion of not less than 10 mass% and not more than 50 mass% based on total mass of all repeating units included in the main chain, and the acidic group-containing monomer unit is included in the graft portion. When the proportion constituted by an aromatic vinyl monomer unit in the main chain of the polymer 1 is not less than 10 mass% and not more than 50 mass% in this manner, the peel strength of an electrode formed using the binder composition can be improved, and the internal resistance of an obtained secondary battery can be reduced. Moreover, when an acidic group-containing monomer unit is included in the graft portion, the viscosity stability of an obtained slurry composition can be further increased.

Note that the phrase "includes a block region formed of a monomer unit" means that "a section where only such monomer units are bonded in a row as repeating units is present in a given polymer".

In the presently disclosed binder composition for a non-aqueous secondary battery, the polymer 1 preferably has an acid value of not less than 0.5 mg CH₃ONa/g and not more than 30 mg CH₃ONa/g. When the acid value of the polymer 1 is within the specific range set forth above in this manner, the viscosity stability of a slurry composition obtained using the binder composition and the peel strength of an obtained electrode can be further improved, and the internal resistance of an obtained secondary battery can be reduced.

Note that the acid value of the polymer 1 can be measured by a method described in the EXAMPLES section.

In the presently disclosed binder composition for a non-aqueous secondary battery, the polymer 2 is preferably a block polymer. When the polymer particles contained in the binder composition contain a specific block polymer as the polymer 2, the peel strength of an obtained electrode can be further improved.

In the presently disclosed binder composition for a non-aqueous secondary battery, the polymer 1 preferably includes either or both of an aliphatic conjugated diene monomer unit and an alkylene structural unit. When the polymer 1 includes either or both of an aliphatic conjugated diene monomer unit and an alkylene structural unit, the flexibility of an obtained electrode mixed material layer can be increased, and the internal resistance of a secondary battery that includes the electrode mixed material layer can be further reduced.

In the presently disclosed binder composition for a non-aqueous secondary battery, the acidic group-containing monomer unit of the polymer 1 is preferably a carboxyl group-containing monomer unit. When the polymer 1 includes a carboxyl group-containing monomer unit, the viscosity stability of an obtained slurry composition can be further increased, and the peel strength of an obtained electrode can be further increased.

Moreover, the present disclosure aims to advantageously solve the problem set forth above, and a presently disclosed method of producing a binder composition for a non-aqueous secondary battery comprises: a step of obtaining a preliminary mixture containing the polymer 1, the polymer 2, an organic solvent, an emulsifier, and water; and a phase-inversion emulsification step of performing phase-inversion emulsification of the preliminary mixture. By obtaining a specific preliminary mixture and then performing phase-inversion emulsification of the preliminary mixture in this manner, it is easy to produce any one of the presently disclosed binder compositions for a non-aqueous secondary battery set forth above. Consequently, it is easy to obtain a binder composition for a non-aqueous secondary battery with which it is possible to form a slurry composition for a non-aqueous secondary battery electrode having excellent viscosity stability and an electrode for a non-aqueous secondary battery having excellent peel strength.

Furthermore, the present disclosure aims to advantageously solve the problem set forth above, and a presently disclosed slurry composition for a non-aqueous secondary battery electrode comprises: an electrode active material; and any one of the binder compositions for a non-aqueous secondary battery set forth above. A slurry composition for a non-aqueous secondary battery electrode that contains an electrode active material and any one of the binder compositions for a non-aqueous secondary battery set forth above in this manner has excellent viscosity stability and can form an electrode having excellent peel strength.

Also, the present disclosure aims to advantageously solve the problem set forth above, and a presently disclosed electrode for a non-aqueous secondary battery comprises an electrode mixed material layer formed using the slurry composition for a non-aqueous secondary battery electrode set forth above. An electrode for a non-aqueous secondary battery that includes an electrode mixed material layer formed using the slurry composition for a non-aqueous secondary battery electrode set forth above in this manner has excellent peel strength.

Moreover, the present disclosure aims to advantageously solve the problem set forth above, and a presently disclosed non-aqueous secondary battery comprises the electrode for a non-aqueous secondary battery set forth above. By using the electrode for a non-aqueous secondary battery set forth above, it is possible to obtain a non-aqueous secondary battery that can display excellent performance such as high output characteristics.

### (Advantageous Effect)

According to the present disclosure, it is possible to provide a binder composition for a non-aqueous secondary battery with which it is possible to form a slurry composition for a non-aqueous secondary battery electrode having excellent viscosity stability and an electrode for a non-aqueous secondary battery having excellent peel strength.

Moreover, according to the present disclosure, it is possible to provide a slurry composition for a non-aqueous secondary battery electrode that has excellent viscosity stability and can form an electrode for a non-aqueous secondary battery having excellent peel strength.

Furthermore, according to the present disclosure, it is possible to provide an electrode for a non-aqueous secondary battery that has excellent peel strength and a non-aqueous secondary battery that includes this electrode for a non-aqueous secondary battery.

### DETAILED DESCRIPTION

The following provides a detailed description of embodiments of the present disclosure.

The presently disclosed binder composition for a non-aqueous secondary battery is a composition that is for use in production of a non-aqueous secondary battery and, in particular, can suitably be used in production of an electrode of a non-aqueous secondary battery. For example, the presently disclosed binder composition for a non-aqueous secondary battery can be used to produce the presently disclosed slurry composition for a non-aqueous secondary battery electrode. Moreover, a slurry composition that is produced using the presently disclosed binder composition can be used in production of an electrode of a non-aqueous secondary battery such as a lithium ion secondary battery. Furthermore, a feature of the presently disclosed non-aqueous secondary battery is that the presently disclosed electrode for a non-aqueous secondary battery formed using the presently disclosed slurry composition is used therein.

Note that the presently disclosed binder composition for a non-aqueous secondary battery, slurry composition for a non-aqueous secondary battery electrode, and electrode for a non-aqueous secondary battery are preferably for a negative electrode, and the presently disclosed non-aqueous secondary battery is preferably a non-aqueous secondary battery in which the presently disclosed electrode for a non-aqueous secondary battery is used as a negative electrode.

### (Binder composition for non-aqueous secondary battery)

The presently disclosed binder composition contains specific polymer particles and can optionally further contain a solvent such as water and other components that can be compounded in binder compositions.

Features of the presently disclosed binder composition are that the polymer particles contain a polymer 1 that is a block polymer including an acidic group-containing monomer unit and a polymer 2 that does not include an acidic group-containing monomer unit, the polymer 1 constitutes a proportion of not less than 10 mass% and not more than 90 mass% based on the total mass of the polymer 1 and the polymer 2, the polymer 2 includes either or both of an aliphatic conjugated diene monomer unit and an alkylene structural unit, and the aliphatic conjugated diene monomer unit and the alkylene structural unit constitute a total proportion of 55 mass% or more based on the total mass of all repeating units included in the polymer 2. As a result, the presently disclosed binder composition makes it possible to provide a binder composition for a non-aqueous secondary battery with which it is possible to form a slurry composition for a non-aqueous secondary battery electrode having excellent viscosity stability and an electrode for a non-aqueous secondary battery having excellent peel strength.

Although it is not clear why a slurry composition for a non-aqueous secondary battery electrode having excellent viscosity stability can be produced and an electrode for a non-aqueous secondary battery having excellent peel strength can be formed as a result of the polymer particles having the chemical composition set forth above, the reason for this is presumed to be as follows. The polymer 1 that contains an acidic group-containing monomer unit is thought to mainly act to increase dispersion stability of the polymer particles in a solvent such as water and thereby increase the viscosity stability of a slurry composition, whereas the polymer 2 is thought to act to impart flexibility to the polymer particles. Moreover, through a synergistic effect of these polymers, the polymer particles are thought to function to increase the peel strength of an obtained electrode.

### <Polymer particles>

The polymer particles are a component that functions as a binder and, in a situation in which an electrode mixed material layer is formed using a slurry composition that contains the binder composition, are a component that can hold components such as an electrode active material so that they do not detach from the electrode mixed material layer, that causes close adherence of the electrode mixed material layer to a current collector, and that enables adhesion of an electrode and a separator via the electrode mixed material layer.

The polymer particles are water-insoluble particles that contain at least the polymer 1 and the polymer 2. The polymer particles contain at least the polymer 1 and the polymer 2, and may contain components other than the polymer 1 and the polymer 2, such as components that are unavoidably mixed in during a production stage of each of the polymers, a production stage of the polymer particles, or the like. Note that when particles are referred to as "water-insoluble" in the present specification, this means that when 0.5 g of the particles are dissolved in 100 g of water at a temperature of 25°C, insoluble content is 90 mass% or more.

### <<Polymer 1>>

The polymer 1 contained in the polymer particles is a block polymer that includes an acidic group-containing monomer unit. Moreover, it is preferable that the polymer 1 is a polymer including a main chain that includes a block region formed of an aromatic vinyl monomer unit (hereinafter, also referred to simply as "aromatic vinyl block region 1") and a graft portion that is bonded to the main chain, that the aromatic vinyl monomer unit constitutes a proportion of not less than 10 mass% and not more than 50 mass% based on the total mass of all repeating units included in the main chain, and that an acidic group-containing monomer unit is included in the graft portion. When the proportion constituted by an aromatic vinyl monomer unit in the main chain of the polymer 1 is not less than 10 mass% and not more than 50 mass% in this manner, the peel strength of an electrode formed using the binder composition can be improved, and the internal resistance of an obtained secondary battery can be reduced. Moreover, when an acidic group-containing monomer unit is included in the graft portion of the polymer 1, the viscosity stability of an obtained slurry composition can be further increased.

More specifically, the polymer 1 is preferably a copolymer that, in addition to the aromatic vinyl block region 1, includes a macromolecule chain section in which repeating units other than aromatic vinyl monomer units are linked (hereinafter, also referred to simply as the "other region"). The aromatic vinyl block region and the other region are present adjacently in the polymer 1. The polymer 1 may include just one aromatic vinyl block region or may include a plurality of aromatic vinyl block regions. Likewise, the polymer 1 may include just one other region or may include a plurality of other regions.

### [Aromatic vinyl block region 1]

The aromatic vinyl block region 1 is a region that only includes an aromatic vinyl monomer unit as a repeating unit as previously described.

A single aromatic vinyl block region 1 may be composed of just one type of aromatic vinyl monomer unit or may be composed of a plurality of types of aromatic vinyl monomer units, but is preferably composed of just one type of aromatic vinyl monomer unit.

Moreover, a single aromatic vinyl block region 1 may include a coupling moiety (i.e., aromatic vinyl monomer units composing a single aromatic vinyl block region may be linked via a coupling moiety).

In a case in which the polymer 1 includes a plurality of aromatic vinyl block regions 1, the types and proportions of aromatic vinyl monomer units composing these aromatic vinyl block regions 1 may be the same or different for each of the aromatic vinyl block regions 1, but are preferably the same.

Examples of aromatic vinyl monomers that can form a constituent aromatic vinyl monomer unit of the aromatic vinyl block region 1 in the polymer 1 include styrene, α-methylstyrene, p-t-butylstyrene, butoxystyrene, vinyltoluene, chlorostyrene, and vinylnaphthalene. Of these aromatic vinyl monomers, styrene is preferable. Note that although one of these aromatic vinyl monomers may be used individually or two or more of these aromatic vinyl monomers may be used in combination, it is preferable that one of these aromatic vinyl monomers is used individually.

The proportion constituted by an aromatic vinyl monomer unit in the polymer 1 based on the total mass (100 mass%) of all repeating units included in the main chain of the polymer 1 is preferably 10 mass% or more, and more preferably 15 mass% or more, and is preferably 50 mass% or less, and more preferably 45 mass% or less. When the proportion constituted by an aromatic vinyl monomer unit is not less than any of the lower limits set forth above, excessive reduction of the strength of the polymer particles can be inhibited, and, in a situation in which an electrode mixed material layer is formed, close adherence between the electrode mixed material layer and a current collector can be increased. As a result, the peel strength of an obtained electrode can be further increased. Moreover, when the proportion constituted by an aromatic vinyl monomer unit is not more than any of the upper limits set forth above, excessive hardening of the polymer 1 and excessive reduction of flexibility can be inhibited. As a result, excessive reduction of the peel strength of an obtained electrode can be inhibited.

Note that the proportion constituted by an aromatic vinyl monomer unit in the main chain of the polymer 1 is normally the same as the proportion constituted by the aromatic vinyl block region 1 in the main chain of the polymer 1.

### [Other region]

As previously described, the other region is a region that includes only repeating units other than aromatic vinyl monomer units (hereinafter, also referred to simply as "other repeating units") as repeating units.

Note that a single other region may be composed of one type of other repeating unit or may be composed of a plurality of types of other repeating units.

Moreover, a single other region may include a coupling moiety (i.e., other repeating units composing a single other region may be linked via a coupling moiety).

In a case in which the polymer 1 includes a plurality of other regions, the types and proportions of other repeating units composing these other regions may be the same or different for each of the other regions.

Examples of other repeating units that may compose the other region of the polymer 1 include, but are not specifically limited to, an aliphatic conjugated diene monomer unit, an alkylene structural unit, and an α,β-unsaturated nitrile monomer unit. Of these other repeating units, it is preferable that the polymer 1 includes either or both of an aliphatic conjugated diene monomer unit and an alkylene structural unit.

### -Aliphatic conjugated diene monomer unit-

Examples of aliphatic conjugated diene monomers that can form a constituent aliphatic conjugated diene monomer unit of the other region include 1,3-butadiene, 2-methyl-1,3-butadiene (isoprene), 2,3-dimethyl-1,3-butadiene, 2-chloro-1,3-butadiene; pentadienes having conjugated double bonds in a main chain and substituted products thereof; and hexadienes having conjugated double bonds in a side chain and substituted products thereof. One of these aliphatic conjugated diene monomers may be used individually, or two or more of these aliphatic conjugated diene monomers may be used in combination.

### -Alkylene structural unit-

A constituent alkylene structural unit of the other region is a repeating unit that is composed of only an alkylene structure represented by a general formula: -CₙH₂ₙ- (n is an integer of 2 or more). The carbon number of the alkylene structural unit may be 8 or less, for example, and is preferably 6 or less.

The alkylene structural unit may be linear or branched.

No specific limitations are placed on the method by which the alkylene structural unit is introduced into the polymer 1. For example, the polymer 1 can be produced by a method in which a polymer is produced from a monomer composition that contains an aliphatic conjugated diene monomer and then this polymer is hydrogenated so as to convert an aliphatic conjugated diene monomer unit to an alkylene structural unit and thereby obtain the polymer 1. Selective hydrogenation of an aliphatic conjugated diene monomer unit can be carried out by a commonly known method such as an oil-layer hydrogenation method or a water-layer hydrogenation method.

In a case in which the polymer 1 includes either or both of an aliphatic conjugated diene monomer unit and an alkylene structural unit, the proportion constituted by the total mass of the aliphatic conjugated diene monomer unit and the alkylene structural unit in the polymer 1 based on the total mass (100 mass%) of all repeating units included in the main chain of the polymer 1 is preferably 50 mass% or more, and more preferably 55 mass% or more, and is preferably 90 mass% or less, and more preferably 85 mass% or less. When the total of the aliphatic conjugated diene monomer unit and the alkylene structural unit in the polymer 1 is not less than any of the lower limits set forth above, the peel strength of an obtained electrode can be further increased due to the flexibility of the polymer particles increasing. Moreover, when the total of the aliphatic conjugated diene monomer unit and the alkylene structural unit in the polymer 1 is not more than any of the upper limits set forth above, the peel strength of an obtained electrode can be further increased due to the strength of the polymer particles further increasing.

### [Graft portion]

The polymer 1 preferably includes a graft portion. More specifically, the polymer 1 preferably includes a graft portion that includes an acidic group-containing monomer unit as a repeating unit. Although no specific limitations are placed on the bonding location of the graft portion to the main chain of the polymer 1, in a case in which the polymer 1 includes an "aromatic vinyl block region 1" and an "other region including either or both of an aliphatic conjugated diene monomer unit and an alkylene structural unit", the graft portion can be bonded to the "other region". When the polymer 1 includes an acidic group-containing monomer unit in the graft portion, the frequency of acidic group-containing monomer units near a surface layer of the polymer particles is higher than in an inner part of the polymer particles. Consequently, the particle stability and dispersion stability of the polymer particles in a solvent such as water can be increased.

Examples of acidic group-containing monomers that can form the acidic group-containing monomer unit include carboxyl group-containing monomers, sulfo group-containing monomers, and phosphate group-containing monomers. Note that monomers corresponding to aromatic vinyl monomers and aliphatic conjugated diene monomers are not included among acidic group-containing monomers that can form the acidic group-containing monomer unit.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxyl group through hydrolysis can also be used as a carboxyl group-containing monomer.

Examples of sulfo group-containing monomers include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the monomers described above for forming a repeating unit included in the graft portion of the polymer 1 may be used individually, or two or more of these monomers may be used in combination. Of these examples, it is preferable to use a carboxyl group-containing monomer such as described above as a monomer for forming a repeating unit included in the graft portion of the polymer 1, and, of such carboxyl group-containing monomers, it is preferable to use maleic acid or maleic anhydride due to low self polymerizability and low probability of formation of a polymer or oligomer that can become an impurity in the binder composition.

No specific limitations are placed on the method by which the graft portion is introduced into the polymer 1. For example, a polymer that includes an aromatic vinyl block region and another region including an aliphatic conjugated diene monomer unit may be produced, and then an acidic group-containing monomer such as described above may be graft polymerized with respect to the polymer, which serves as a backbone portion (main chain), by a known method using a radical initiator such as a redox initiator so as to obtain a polymer 1 having a structure in which a polymer of a graft portion is bonded to a main chain of the polymer.

### [Acid value of polymer 1]

The acid value of the polymer 1 is preferably 0.5 mg CH₃ONa/g or more, more preferably 2.0 mg CH₃ONa/g or more, and even more preferably 5.0 mg CH₃ONa/g or more, and is preferably 30 mg CH₃ONa/g or less, more preferably 20 mg CH₃ONa/g or less, and even more preferably 12 mg CH₃ONa/g or less. When the acid value of the polymer 1 is not less than any of the lower limits set forth above, the stability of the polymer particles can be increased, and the viscosity stability of an obtained slurry composition can be further increased. Moreover, when the acid value of the polymer 1 is not less than any of the lower limits set forth above, the peel strength of an obtained electrode can be increased. Furthermore, when the acid value of the polymer 1 is not more than any of the upper limits set forth above, the flexibility of the polymer particles can be increased. Consequently, in a situation in which an electrode is formed, it is possible to achieve better close adherence between a current collector and an electrode mixed material layer and to further increase the peel strength of the electrode. Also, when the acid value of the polymer is not more than any of the upper limits set forth above, the internal resistance of an obtained secondary battery can be further reduced. Note that the acid value of the polymer 1 indicates the quantity in which an acidic group-containing monomer unit is included in the polymer 1. A polymer 1 having a desired acid value can be obtained by, in production of the polymer 1, appropriately adjusting the amounts of an acidic group-containing monomer and a polymerization initiator that are added in graft polymerization, the polymerization time, and so forth.

### [Production method of polymer 1]

The polymer 1 can be produced by, for example, adding a second monomer component to a solution obtained by polymerizing a first monomer component, differing from the second monomer component, in an organic solvent, polymerizing the second monomer component, and then further repeating monomer component addition and polymerization as necessary. The organic solvent that is used as the reaction solvent is not specifically limited and can be selected as appropriate depending on the types of monomers and so forth. Note that a coupling reaction using a coupling agent may be performed in production of the polymer 1 that is a block polymer. By performing a coupling reaction, it is possible to cause bonding of the ends of diblock structures included in the block polymer via the coupling agent and to thereby convert these diblock structures to a triblock structure, for example. Examples of coupling agents that can be used in the coupling reaction include, without any specific limitations, known polyfunctional coupling agents that have a functionality of 2 or higher.

Although the polymer 1 can be synthesized in accordance with a method such as described above, the polymer 1 may alternatively be acquired as a commercially available product. Further alternatively, the polymer 1 may be obtained by performing graft polymerization of an acidic group-containing monomer with respect to a commercially available polymer that does not include an acidic group-containing monomer unit.

Examples of products that can be used as the polymer 1 include the Tuftec^{®} (Tuftec is a registered trademark in Japan, other countries, or both) M series (maleic anhydride-modified SEBS (styrene-ethylene/butylene-styrene) produced by Asahi Kasei Corporation) and the KRATON^{®} (KRATON is a registered trademark in Japan, other countries, or both) FG series (maleic anhydride-modified SEBS produced by Kraton Polymers).

### <<Polymer 2>>

The polymer 2 contained in the polymer particles does not include an acidic group-containing monomer unit. Note that an acidic group-containing monomer unit is as previously described in relation to the polymer 1, and a feature of the polymer 2 is that it does not include such an acidic group-containing monomer unit. Moreover, the polymer 2 is a polymer that includes either or both of an aliphatic conjugated diene monomer unit and an alkylene structural unit and in which the aliphatic conjugated diene monomer unit and the alkylene structural unit constitute a total proportion of 55 mass% or more based on the total mass (100 mass%) of all repeating units included in the polymer 2. Note that the polymer particles do not necessarily contain just one component corresponding to the polymer 2 and can contain a plurality of components corresponding to the polymer 2. The polymer 2 can be a random polymer or a block polymer without any specific limitations, but is preferably a block polymer. When the polymer particles contain a specific block polymer as the polymer 2, the peel strength of an obtained electrode can be further improved.

Examples of aliphatic conjugated diene monomer units and alkylene structural units that can be included in the polymer 2 include the same units as aliphatic conjugated diene monomer units and alkylene structural units that can be included as other repeating units in the polymer 1. From a viewpoint of electrochemical stability, it is preferable that the polymer 2 includes an aliphatic conjugated diene monomer unit. In particular, it is preferable that a 1,3-butadiene monomer unit or an isoprene monomer unit is included as an aliphatic conjugated diene monomer unit in the polymer 2, and more preferable that a 1,3-butadiene monomer unit is included as an aliphatic conjugated diene monomer unit in the polymer 2 from a viewpoint of further increasing the peel strength of an obtained electrode.

The total proportion constituted by an aliphatic conjugated diene monomer unit and an alkylene structural unit in the polymer 2 based on the total mass (100 mass%) of all repeating units included in the polymer 2 is required to be 55 mass% or more, is preferably 60 mass% or more, and is preferably 95 mass% or less. Note that the total proportion constituted by an aliphatic conjugated diene monomer unit and an alkylene structural unit in the polymer 2 may be 100% (i.e., the polymer 2 may be a polymer composed of only an aliphatic conjugated diene monomer unit and an alkylene structural unit). When the total proportion in the polymer 2 is not less than any of the lower limits set forth above, the flexibility of the polymer particles can be increased, and, as a result, the internal resistance of an obtained secondary battery can be further reduced. Moreover, when the total proportion in the polymer 2 is not more than the upper limit set forth above, the strength of the polymer particles can be further increased, and, as a result, the peel strength of an obtained electrode can be increased.

### [Other units]

The polymer 2 may optionally include other units besides those described above. Examples of these units include an aromatic vinyl monomer unit and an α,β-unsaturated nitrile monomer unit such as previously described in relation to the polymer 1. In a case in which the polymer 2 is a block polymer, it is preferable that the polymer 2 includes a block region formed of an aromatic vinyl monomer unit (hereinafter, also referred to simply as "aromatic vinyl block region 2") in addition to a block region including either or both of an aliphatic conjugated diene monomer unit and an alkylene structural unit. Details pertaining to the aromatic vinyl block region 2 are the same as previously described for the aromatic vinyl block region 1 of the polymer 1. When the polymer 2 includes an aromatic vinyl block region 2, the peel strength of an obtained electrode can be further increased.

The proportion constituted by other units in the polymer 2 based on the total mass (100 mass%) of all repeating units included in the polymer 2 is preferably not less than 5 mass% and not more than 45 mass%.

### <<Proportion of polymer 1 relative to total mass of polymer 1 and polymer 2>>

In the polymer particles that are contained in the binder composition, the proportion constituted by the polymer 1 based on the total mass (100 mass%) of the polymer 1 and the polymer 2 is required to be 10 mass% or more, and is preferably 20 mass% or more, and more preferably 30 mass% or more. Moreover, the proportion constituted by the polymer 1 based on the total mass (100 mass%) of the polymer 1 and the polymer 2 is required to be 90 mass% or less, and is more preferably 80 mass% or less, and even more preferably 70 mass% or less. When the proportion of the polymer 1 is not less than any of the lower limits set forth above, the stability of the polymer particles in a slurry composition can be increased, and thus the viscosity stability of the slurry composition can be increased. Moreover, when the proportion of the polymer 1 is not more than any of the upper limits set forth above, the peel strength of an obtained electrode can be increased.

### <<Other components>>

The polymer particles may contain known additives. Examples of such known additives include antioxidants and the like. Examples of antioxidants that may be used include, but are not specifically limited to, hindered phenol antioxidants such as 4-[[4,6-bis(octylthio)-1,3,5-triazin-2-yl]amino]-2,6-di-tert-butylphenol; and phosphite antioxidants such as 3,9-bis(octadecyloxy)-2,4,8,10-tetraoxa-3,9-diphosphaspiro[5.5]undecane.

### <<Production method of polymer particles>>

No specific limitations are placed on the production method of the polymer particles that contain the polymer 1 and the polymer 2 described above. For example, the specific polymer particles described above can easily be produced through a step of obtaining a preliminary mixture containing the polymer 1, the polymer 2, an organic solvent, an emulsifier, and water (preliminary mixing step) and a phase-inversion emulsification step of performing phase-inversion emulsification of the obtained preliminary mixture.

### -Preliminary mixing step-

In the preliminary mixing step, a preliminary mixture that contains the polymer 1, the polymer 2, an organic solvent, an emulsifier, and water is obtained. No specific limitations are placed on the means by which the preliminary mixture is obtained. For example, the preliminary mixture can be obtained by dissolving both the polymer 1 and the polymer 2 in an organic solvent and then, in this state, mixing an emulsifier and water therewith.

Note that in a case in which a polymer obtained through solution polymerization in an organic solvent is used as either or both of the polymer 1 and the polymer 2, the polymerization reaction liquid can be used in that state as a polymer solution.

Also note that a known organic solvent such as cyclohexane can be selected as appropriate as the organic solvent depending on the chemical compositions of the polymer 1 and the polymer 2, and so forth. Moreover, a known emulsifier such as sodium alkylbenzene sulfonate can be selected as appropriate as the emulsifier depending on the properties of the used organic solvent, the chemical compositions of the polymer 1 and the polymer 2, and so forth.

### -Phase-inversion emulsification step-

The method of phase-inversion emulsification in the phase-inversion emulsification step is not specifically limited and can, for example, be a method in which an emulsifying/dispersing device is used to perform phase-inversion emulsification of the preliminary mixture obtained in the preliminary mixing step described above. Specific examples of emulsifying/dispersing devices that can be used include, but are not specifically limited to, batch emulsifying/dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying/dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying/dispersing devices such as a Microfluidizer (product name; produced by Mizuho Industrial Co., Ltd.), a Nanomizer (product name; produced by Nanomizer Inc.), an APV Gaulin (product name; produced by Gaulin), and a LAB 1000 (produced by SPX FLOW, Inc.); membrane emulsifying/dispersing devices such as a Membrane Emulsifier (product name; produced by Reica Co., Ltd.); vibratory emulsifying/dispersing devices such as a Vibro Mixer (product name; produced by Reica Co., Ltd.); and ultrasonic emulsifying/dispersing devices such as an Ultrasonic Homogenizer (product name; produced by Branson). Conditions of the emulsification operation performed by the emulsifying/dispersing device (for example, processing temperature and processing time) may be set as appropriate so as to achieve a desired dispersion state without any specific limitations.

A known method may be used to remove organic solvent from the emulsion obtained after phase-inversion emulsification as necessary, for example, so as to yield a water dispersion of polymer particles containing the polymer 1 and the polymer 2.

### <Other components>

The presently disclosed binder composition can contain components other than those described above (i.e., other components). For example, the binder composition may contain a known particulate binder (styrene butadiene random copolymer, acrylic polymer, etc.) other than the previously described polymer particles.

The binder composition may also contain known additives. Examples of such known additives include the additives previously described as additives that can be contained in the polymer particles and also defoamers, dispersants, thickeners, and so forth.

The binder composition can optionally contain water as a solvent and a small amount of an organic solvent. This organic solvent may be a residue of an organic solvent that was used in production of the polymer particles.

Note that one other component may be used individually, or two or more other components may be used in combination in a freely selected ratio.

### (Production method of binder composition)

The presently disclosed method of producing a binder composition includes producing polymer particles by the previously described method of producing polymer particles. In other words, the presently disclosed method of producing a binder composition includes at least the previously described preliminary mixing step and phase-inversion emulsification step. Moreover, the presently disclosed method of producing a binder composition may optionally further include a step of adding a desired additive or the like to a water dispersion of polymer particles containing the polymer 1 and the polymer 2 that is obtained through the phase-inversion emulsification step.

### (Slurry composition for non-aqueous secondary battery electrode)

The presently disclosed slurry composition is a composition that is used for forming an electrode mixed material layer of an electrode. The presently disclosed slurry composition contains the binder composition set forth above and further contains an electrode active material. In other words, the presently disclosed slurry composition contains the previously described polymer particles and an electrode active material, and optionally further contains water as a solvent and other components. The presently disclosed slurry composition has excellent viscosity stability as a result of containing the binder composition set forth above. Moreover, the presently disclosed slurry composition can be used to form an electrode having excellent peel strength.

### <Binder composition>

The presently disclosed binder composition set forth above is used as the binder composition.

No specific limitations are placed on the amount of the binder composition that is compounded in the slurry composition. For example, the amount of the binder composition can be set as an amount such that, in terms of solid content, the amount of the polymer particles is not less than 0.5 parts by mass and not more than 15 parts by mass per 100 parts by mass of the electrode active material.

### <Electrode active material>

Any known electrode active material that is used in secondary batteries can be used as the electrode active material without any specific limitations. Specifically, examples of electrode active materials that can be used in an electrode mixed material layer of a lithium ion secondary battery, which is one example of a secondary battery, include the following electrode active materials, but are not specifically limited thereto.

### [Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.

Specific examples of positive electrode active materials that may be used include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn such as Li[Ni_{5/10}Co_{2/10}Mn_{3/10}]O₂, a lithium-containing complex oxide of Ni-Mn-Al, a lithium-containing complex oxide of Ni-CoAl, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

Note that one of the positive electrode active materials described above may be used individually, or two or more of the positive electrode active materials described above may be used in combination.

### [Negative electrode active material]

A negative electrode active material that is compounded in a negative electrode mixed material layer of a negative electrode in a lithium ion secondary battery may, for example, be a carbon-based negative electrode active material, a metal-based negative electrode active material, or a negative electrode active material that is a combination thereof.

A carbon-based negative electrode active material can be defined as an active material that contains carbon as its main framework and into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasiisotropic carbon, pyrolyzed furfuryl alcohol resin (PFA), and hard carbon, and graphitic materials such as natural graphite and artificial graphite.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); and an oxide, sulfide, nitride, silicide, carbide, or phosphide of any of the preceding examples. Moreover, an oxide such as lithium titanate can be used.

Note that one of the negative electrode active materials described above may be used individually, or two or more of the negative electrode active materials described above may be used in combination.

### <Other components>

Examples of other components that can be contained in the slurry composition include, but are not specifically limited to, conductive materials and the same components as other components that can be contained in the presently disclosed binder composition. Note that one other component may be used individually, or two or more other components may be used in combination in a freely selected ratio.

### <Production of slurry composition>

No specific limitations are placed on the method by which the slurry composition is produced.

For example, the slurry composition can be produced by mixing the binder composition, the electrode active material, and other components that are used as necessary in the presence of an aqueous medium.

Note that a solvent such as water used in production of the slurry composition is also inclusive of solvent that was contained in the binder composition. The mixing method is not specifically limited and can be mixing using a typically used stirrer or disperser.

### (Electrode for non-aqueous secondary battery)

The presently disclosed electrode for a non-aqueous secondary battery includes an electrode mixed material layer formed using the slurry composition for a non-aqueous secondary battery electrode set forth above. Consequently, the electrode mixed material layer is formed of a dried product of the slurry composition set forth above, normally contains an electrode active material and a component derived from polymer particles, and optionally contains other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Although the polymer particles are present in a particulate form in the slurry composition, the polymer particles may have a particulate form or any other form in the electrode mixed material layer formed using the slurry composition.

The presently disclosed electrode for a non-aqueous secondary battery has excellent peel strength as a result of the electrode mixed material layer being formed using the slurry composition for a non-aqueous secondary battery electrode set forth above.

### <Production of electrode for non-aqueous secondary battery>

The electrode mixed material layer of the presently disclosed electrode for a non-aqueous secondary battery can be formed by any of the following methods, for example.
(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to a pressing process, such as mold pressing or roll pressing. The pressing process improves close adherence of the electrode mixed material layer and the current collector and enables further densification of the obtained electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed non-aqueous secondary battery includes a positive electrode, a negative electrode, an electrolyte solution, and a separator, and has the electrode for a non-aqueous secondary battery set forth above as at least one of the positive electrode and the negative electrode. The presently disclosed non-aqueous secondary battery can display excellent battery characteristics as a result of being produced by using the electrode for a non-aqueous secondary battery set forth above as at least one of the positive electrode and the negative electrode.

Although the following describes, as one example, a case in which the non-aqueous secondary battery is a lithium ion secondary battery, the presently disclosed non-aqueous secondary battery is not limited to the following example.

### <Electrodes>

Examples of electrodes other than the presently disclosed electrode for a non-aqueous secondary battery set forth above that can be used in the presently disclosed non-aqueous secondary battery include known electrodes that are used in production of secondary batteries without any specific limitations. Specifically, an electrode obtained by forming an electrode mixed material layer on a current collector by a known production method may be used as an electrode other than the presently disclosed electrode for a non-aqueous secondary battery set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Separator>

The separator is not specifically limited and can be a separator such as described in JP2012-204303A, for example. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. The electrode for a non-aqueous secondary battery set forth above is used as at least one of the positive electrode and the negative electrode in the presently disclosed non-aqueous secondary battery, and is preferably used as the negative electrode. The presently disclosed non-aqueous secondary battery may be provided with an overcurrent preventing device such as a fuse or a PTC device; an expanded metal; or a lead plate as necessary in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified. Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in the polymer. Furthermore, in the case of polymer particles that are obtained through phase-inversion emulsification of a preliminary mixture obtained through mixing of a plurality of types of polymers, the ratio of the plurality of types of polymers in the polymer particles is the same as the mixing ratio of the plurality of types of polymers in the preliminary mixture.

Measurements of various properties and various evaluations were performed as follows in the examples and comparative examples.

### <Chemical composition of polymer>

Polymers used in the examples and comparative examples were each used as a measurement sample. The intensities of peaks attributed respectively to aromatic vinyl monomer units, aliphatic conjugated diene monomer units, and acidic group-containing monomer units included in the measurement sample were calculated by ¹H-NMR. The peak intensity attributed to each type of monomer unit as a proportion relative to the total peak intensity was taken to be the proportion constituted by that monomer unit in the polymer serving as a measurement sample.

### <Acid value of polymer 1>

A polymer 1 was dried under conditions of 1 hour at 90°C. Next, 0.05 g of the dried polymer 1 was weighed out and was dissolved in 50 mL of toluene at room temperature, and then 10 mL of ethanol was added and mixed therewith to produce a polymer solution. An automatic potentiometric titrator (AT610 produced by Kyoto Electronics Manufacturing Co., Ltd.) was then used to perform potentiometric titration. Note that 0.05 mol/L sodium methoxide/methanol solution (calibration factor f = 1.012) was used as a titrant. A glass electrode was used as an indicator electrode, and an electrode having a sleeve-type liquid junction (internal liquid: 1 M LiCl/ethanol solution) was used as a reference electrode. The weight of sodium methoxide per 1 g of polymer by the end point of titration was taken to be the acid value.

### <Viscosity stability of slurry composition>

The viscosity η0 of an obtained slurry composition was measured using a B-type viscometer (produced by Toki Sangyo Co., Ltd.; product name: TVB-10; rotation speed: 60 rpm). Next, the slurry composition that had undergone viscosity measurement was stirred for 24 hours using a planetary mixer (rotation speed: 60 rpm), and the viscosity η1 of the slurry composition after stirring was measured using the same B-type viscometer as described above (rotation speed: 60 rpm). A viscosity change rate Δη of the slurry composition between before and after stirring was calculated (Δη = {(η0 - η1)/η0} × 100(%)), and the viscosity stability of the slurry composition was evaluated by the following standard. Note that the temperature during viscosity measurement was 25°C. An absolute value |Δη| for the viscosity change rate that is closer to 0 indicates that the slurry composition has better viscosity stability.
A: Viscosity change rate absolute value |Δη| of not less than 0% and less than 10%
B: Viscosity change rate absolute value |Δη| of not less than 10% and less than 20%
C: Viscosity change rate absolute value |Δη| of not less than 20% and less than 30%
D: Viscosity change rate absolute value |Δη| of 30% or more

### <Peel strength of electrode>

A produced negative electrode was cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner, and an average value thereof was determined and was taken to be the peel strength (A) of the electrode. An evaluation was made based on the following standard. A larger peel strength indicates larger binding strength of the negative electrode mixed material layer to the current collector, and thus indicates larger close adherence strength.
A: 10 N/m or more
B: Not less than 7 N/m and less than 10 N/m
C: Not less than 5 N/m and less than 7 N/m
D: Less than 5 N/m

### <Internal resistance of secondary battery>

Measurement of IV resistance as described below was performed in order to evaluate the internal resistance of a lithium ion secondary battery. The lithium ion secondary battery was subjected to conditioning in which it underwent 3 cycles of an operation of charging to a voltage of 4.2 V with a 0.1C charge rate, resting for 10 minutes, and subsequently CC discharging to 3.0 V with a 0.1C discharge rate at a temperature of 25°C. The lithium ion secondary battery was subsequently charged to 3.75 V at 1C (C is a value expressed by rated capacity (mA)/1 hour (h)) in a -10°C atmosphere and was then subjected to 20 seconds of charging and 20 seconds of discharging centered around 3.75 V at each of 0.5C, 1.0C, 1.5C, and 2.0C. For each of these cases, the battery voltage after 15 seconds at the charging side was plotted against a current value, and the gradient of this plot was determined as the IV resistance (Ω). The obtained value (Ω) for the IV resistance was evaluated by the following standard. A smaller value for the IV resistance indicates that the secondary battery has lower internal resistance.
A: Less than 2.0 Ω
B: Not less than 2.0 Ω and less than 2.3 Ω
C: Not less than 2.3 Ω and less than 2.5 Ω
D: 2.5 Ω or more

### (Example 1)

### <Production of binder composition for non-aqueous secondary battery>

### 1. Production of polymer particles

### 1-1. Preliminary mixing step

### • Production of cyclohexane solution of polymer 1

Maleic acid-modified SEBS (maleic anhydride-modified styreneethylene/butylene-styrene block polymer; produced by Asahi Kasei Corporation; Tuftec^{®} M1913; acid value: 10 mg CH₃ONa/g; styrene units: 30 mass%; total ethylene units and butylene units: 70 mass%) was added to cyclohexane as an organic solvent such that the solid content concentration was 5.0 mass% and was stirred therewith at 1,000 rpm for 3 hours by a disper blade to produce a cyclohexane solution of a polymer 1 that was a block polymer including an acidic group-containing monomer unit.

### • Production of cyclohexane solution of polymer 2

A pressure-resistant reactor was charged with 233.3 kg of cyclohexane as an organic solvent, 54.2 mmol of N,N,N',N'-tetramethylethylenediamine (TMEDA), and 30.0 kg of styrene as an aromatic vinyl monomer. These materials were stirred at 40°C while 1806.5 mmol of n-butyllithium as a polymerization initiator was added thereto, and then 1 hour of polymerization was performed under heating at 50°C. The polymerization conversion rate of styrene was 100%. Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%. Next, 722.6 mmol of dichlorodimethylsilane as a coupling agent was added into the pressure-resistant reactor and a coupling reaction was carried out for 2 hours to form a styrene-butadiene coupled block copolymer. Thereafter, 3612.9 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tertbutylphenol as a hindered phenol antioxidant and 0.09 parts of 3,9-bis(octadecyloxy)-2,4,8,10-tetraoxa-3,9-diphosphaspiro[5.5]undecane as a phosphite antioxidant were added to 100 parts of the reaction liquid (containing 30.0 parts of polymer component) and were mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a polymer 2 that was a block polymer that did not include an acidic group-containing monomer unit and in which the proportional content of an aliphatic conjugated diene monomer unit was 70 mass%.

The collected dried product was dissolved in cyclohexane to produce a cyclohexane solution of the polymer 2 in which the concentration of the polymer 2 was 5.0 mass%.

### • Production of emulsifier aqueous solution

Sodium alkylbenzene sulfonate was dissolved in deionized water to produce a 0.15 mass% emulsifier aqueous solution.

### • Preliminary mixing operation

A tank was charged with 500 g of the cyclohexane solution of the polymer 1, 500 g of the cyclohexane solution of the polymer 2, and 1,400 g of the emulsifier aqueous solution that were obtained as described above, and then preliminary mixing thereof was performed by stirring to obtain a preliminary mixture. Next, the obtained preliminary mixture was transferred from inside the tank to a high-pressure emulsifying/dispersing device (LAB1000 produced by SPX FLOW, Inc.) using a metering pump and was circulated (number of passes: 5) in a flow channel inside the high-pressure emulsifying/dispersing device so as to obtain an emulsion in which the preliminary mixture had undergone phase-inversion emulsification.

Next, cyclohexane in the obtained emulsion was evaporated under reduced pressure in a rotary evaporator and was thereby removed. The emulsion remaining after evaporation of cyclohexane was subsequently subjected to 10 minutes of centrifugation at 7,000 rpm in a centrifuge (Himac CR21N produced by Hitachi Koki Co., Ltd.), and then the upper layer portion was withdrawn to perform concentration.

Thereafter, the upper layer portion was adjusted to a solid content concentration of 40 mass% through addition of deionized water and was subsequently filtered through a 100-mesh screen to obtain a water dispersion containing polymer particles that contained the polymer 1 and the polymer 2.

### <Production of slurry composition for non-aqueous secondary battery negative electrode>

A planetary mixer was charged with 97.5 parts of graphite (natural graphite; capacity: 360 mAh/g) as a negative electrode active material and 1 part (in terms of solid content) of carboxymethyl cellulose (CMC) as a thickener to obtain a mixture. The obtained mixture was adjusted to a solid content concentration of 60% with deionized water and was subsequently kneaded at a rotation speed of 45 rpm for 60 minutes. Thereafter, the binder composition produced as described above was added in an amount of 1.5 parts in terms of solid content of the polymer particles, and a further 40 minutes of kneading was performed at a rotation speed of 40 rpm. In addition, deionized water was added to adjust the viscosity (measured by B-type viscometer; temperature: 25°C; rotor speed: 60 rpm) to 3,000 ± 500 mPa·s and thereby obtain a slurry composition for a negative electrode.

The viscosity stability of the obtained slurry composition for a negative electrode was evaluated. The result is shown in Table 1.

### <Formation of negative electrode>

The obtained slurry composition for a negative electrode was applied onto electrolytic copper foil of 15 µm in thickness serving as a current collector by a comma coater such as to have a coating weight of 11 ± 0.5 mg/cm². The copper foil with the slurry composition for a negative electrode applied thereon was then conveyed inside an oven having a temperature of 120°C for 2 minutes and an oven having a temperature of 130°C for 2 minutes at a speed of 400 mm/min so as to dry the slurry composition on the copper foil and thereby obtain a negative electrode web including a negative electrode mixed material layer formed on the current collector.

The negative electrode mixed material layer-side of the produced negative electrode web was subsequently roll pressed in an environment having a temperature of 25 ± 3°C to obtain a negative electrode having a negative electrode mixed material layer density of 1.60 g/cm³. The peel strength of the negative electrode obtained in this manner was evaluated. The result is shown in Table 1.

### <Formation of positive electrode>

A planetary mixer was charged with 97 parts of an active material NMC532 (Li[Ni_{5/10}Co_{2/10}Mn_{3/10}]O₂) based on a lithium complex oxide of Co-Ni-Mn as a positive electrode active material, 1 part of acetylene black (produced by Denka Company Limited; product name: HS-100) as a conductive material, and 2 parts (in terms of solid content) of polyvinylidene fluoride (produced by Kureha Corporation; product name: #7208) as a binder, and was used to mix these materials. In addition, N-methyl-2-pyrrolidone (NMP) was gradually added as an organic solvent and was mixed therewith by stirring at a temperature of 25 ± 3°C and a rotation speed of 25 rpm to yield a slurry composition for a positive electrode having a viscosity (measured by B-type viscometer; temperature: 25 ± 3°C; rotor: M4; rotor speed: 60 rpm) of 3,600 mPa·s.

The obtained slurry composition for a positive electrode was applied onto aluminum foil of 20 µm in thickness serving as a current collector by a comma coater such as to have a coating weight of 20 ± 0.5 mg/cm². The aluminum foil was then conveyed inside an oven having a temperature of 120°C for 2 minutes and an oven having a temperature of 130°C for 2 minutes at a speed of 200 mm/min so as to dry the slurry composition on the aluminum foil and thereby obtain a positive electrode web including a positive electrode mixed material layer formed on the current collector.

The positive electrode mixed material layer-side of the produced positive electrode web was subsequently roll pressed in an environment having a temperature of 25 ± 3°C to obtain a positive electrode having a positive electrode mixed material layer density of 3.20 g/cm³.

### <Preparation of separator>

A separator made of a single layer of polypropylene (produced by Celgard, LLC.; product name: Celgard 2500) was prepared as a separator composed of a separator substrate.

### <Production of lithium ion secondary battery>

The negative electrode, positive electrode, and separator described above were used to produce a single-layer laminate cell (initial design discharge capacity equivalent to 30 mAh), were then arranged inside aluminum packing, and were subjected to vacuum drying under conditions of 10 hours at 60°C. Thereafter, an LiPF6 solution of 1.0 M in concentration (solvent: mixed solvent of ethylene carbonate (EC)/diethyl carbonate (DEC) = 5/5 (volume ratio); additive: containing 2 volume% (solvent ratio) of vinylene carbonate) was loaded into the aluminum packing as an electrolyte solution. The aluminum packing was then closed by heat sealing at a temperature of 150°C to tightly seal an opening of the aluminum packing, and thereby produce a lithium ion secondary battery. This lithium ion secondary battery was used to evaluate internal resistance. The result is shown in Table 1.

### (Examples 2 and 3)

Various operations, measurements, and evaluations were performed in the same way as in Example 1 with the exception that in production of polymer particles, the amount of the cyclohexane solution of the polymer 1 and the amount of the cyclohexane solution of the polymer 2 that were mixed in the "Preliminary mixing operation" were changed such that the ratio of the polymer 1 in the obtained polymer particles was as indicated in Table 1. The results are shown in Table 1.

### (Example 4)

Various operations, measurements, and evaluations were performed in the same way as in Example 1 with the exception that in production of a cyclohexane solution of a polymer 1, maleic acid-modified SEBS produced by Asahi Kasei Corporation (product name: Tuftec^{®} M1911; acid value: 2 mg CH₃ONa/g) was used as a polymer 1 having a different acid value. The results are shown in Table 1.

### (Example 5)

Various operations, measurements, and evaluations were performed in the same way as in Example 1 with the exception that in production of a cyclohexane solution of a polymer 1, a polymer 1 prepared as described below was used as a polymer 1 having a different acid value. The results are shown in Table 1.

### <Preparation of polymer 1>

A separable flask was charged with 100 parts of maleic acid-modified SEBS produced by Asahi Kasei Corporation (product name: Tuftec^{®} M1913), 900 parts of tertbutylbenzene, 7 parts of maleic anhydride, and 2.5 parts of dicumyl peroxide (PERCUMYL D produced by NOF Corporation). These materials were reacted under stirring at 130°C in a nitrogen atmosphere for 5 hours. Once the reaction was complete, the reaction liquid was gradually added into methanol to cause precipitation of a polymer. The precipitated polymer was further washed with methanol. The washed polymer was then vacuum dried at 60°C for 1 day. The acid value was subsequently measured and was determined to be 15 mg CH₃ONa/g.

### (Example 6)

Various operations, measurements, and evaluations were performed in the same way as in Example 1 with the exception that in production of a cyclohexane solution of a polymer 1, a polymer 1 prepared as described below was used as a polymer 1 having a different acid value. The results are shown in Table 1.

### <Preparation of polymer 1>

A polymer was produced in the same way as in Example 5 with the exception that the amount of maleic anhydride in Example 5 was changed from 7 parts to 18 parts. The acid value of the obtained polymer was measured and was determined to be 25 mg CH₃ONa/g.

### (Example 7)

Various operations, measurements, and evaluations were performed in the same way as in Example 1 with the exception that in production of a cyclohexane solution of a polymer 2,70.0 kg of isoprene was used instead of 70.0 kg of 1,3-butadiene as an aliphatic conjugated diene monomer. The results are shown in Table 1.

### (Example 8)

Various operations, measurements, and evaluations were performed in the same way as in Example 1 with the exception that a cyclohexane solution of isoprene rubber of 5.0 mass% in concentration that was obtained by dissolving isoprene rubber (Nipol IR2200 produced by Zeon Corporation) as a polymer 2 in cyclohexane was used. The results are shown in Table 1.

### (Comparative Example 1)

A cyclohexane solution of a polymer 1, a cyclohexane solution of a polymer 2, and an emulsifier aqueous solution having the same chemical compositions as in Example 1 were produced in the same way as in Example 1. A tank was charged with 500 g of the cyclohexane solution of the polymer 1 and 700 g of the emulsifier aqueous solution that were obtained, and then an operation using a high-pressure emulsifying/dispersing device was performed in the same way as the operation in the "Preliminary mixing operation" of Example 1. Subsequent operations were also performed in the same way as in Example 1 to obtain a water dispersion 1 that contained polymer particles containing the polymer 1 (but not containing the polymer 2). Separately to the above, the cyclohexane solution of the polymer 2 was subjected to the same operation to obtain a water dispersion 2 that contained polymer particles containing the polymer 2 (but not containing the polymer 1). Moreover, in production of a slurry composition for a negative electrode, the water dispersion 1 and the water dispersion 2 were added such that the amount in terms of solid content of the polymer particles containing the polymer 1 (but not containing the polymer 2) was 0.75 parts and the amount in terms of solid content of the polymer particles containing the polymer 2 (but not containing the polymer 1) was 0.75 parts relative to 97.5 parts of graphite.

With the exception of these points, various operations, measurements, and evaluations were performed in the same way as in Example 1. The results are shown in Table 1.

### (Comparative Example 2)

A cyclohexane solution of a polymer 2 and an emulsifier aqueous solution having the same chemical compositions as in Example 1 were produced in the same way as in Example 1. A tank was charged with 500 g of the cyclohexane solution of the polymer 2 and 700 g of the emulsifier aqueous solution that were obtained, and then an operation using a high-pressure emulsifying/dispersing device was performed in the same way as the operation in the "Preliminary mixing operation" of Example 1. Subsequent operations were also performed in the same way as in Example 1 to obtain a water dispersion that contained polymer particles containing the polymer 2 (but not containing a polymer 1). Moreover, in production of a slurry composition for a negative electrode, the water dispersion was added such that the amount in terms of solid content of the polymer particles containing the polymer 2 (but not containing a polymer 1) was 1.5 parts relative to 97.5 parts of graphite.

Operations related to a polymer 1 were not performed, and thus a slurry composition that did not contain polymer particles containing a polymer 1 was obtained.

With the exception of these points, various operations, measurements, and evaluations were performed in the same way as in Example 1. The results are shown in Table 1.

### (Comparative Example 3)

A cyclohexane solution of a polymer 1 and an emulsifier aqueous solution having the same chemical compositions as in Example 1 were produced in the same way as in Example 1. A tank was charged with 500 g of the cyclohexane solution of the polymer 1 and 700 g of the emulsifier aqueous solution that were obtained, and then an operation using a high-pressure emulsifying/dispersing device was performed in the same way as the operation in the "Preliminary mixing operation" of Example 1. Subsequent operations were also performed in the same way as in Example 1 to obtain a water dispersion that contained polymer particles containing the polymer 1 (but not containing a polymer 2). Moreover, in production of a slurry composition for a negative electrode, the water dispersion was added such that the amount in terms of solid content of the polymer particles containing the polymer 1 (but not containing a polymer 2) was 1.5 parts relative to 97.5 parts of graphite.

Operations related to a polymer 2 were not performed, and thus a slurry composition that did not contain polymer particles containing a polymer 2 was obtained.

With the exception of these points, various operations, measurements, and evaluations were performed in the same way as in Example 1. The results are shown in Table 1.

In Table 1:
"M-SEBS" indicates maleic anhydride-modified styrene-ethylene/butylene-styrene block polymer;
"ST" indicates styrene;
"SBS" indicates styrene-butadiene-styrene block polymer;
"SIS" indicates styrene-isoprene-styrene block polymer;
"IR" indicates isoprene rubber;
"BT" indicates 1,3-butadiene unit; and
"IP" indicates isoprene unit.

**Table 1**

| | | | | Examples | | | | | | | | Comparative examples | | |
|---|---|---|---|---|---|---|---|---|---|---|---|---|---|---|
| | | | | 1 | 2 | 3 | 4 | 5 | 6 | 7 | 8 | 1 | 2 | 3 |
| Polymer particles | Types of polymers per one polymer particle | | | Two types | Two types | Two types | Two types | Two types | Two types | Two types | Two types | One type each (mixture of two types of particles) | One type | One type |
| | Polymer 1 | Type | | M-SEBS | M-SEBS | M-SEBS | M-SEBS | M-SEBS | M-SEBS | M-SEBS | M-SEBS | M-SEBS | - | M-SEBS |
| | | Graft portion including acidic group-containing monomer unit | | Yes | Yes | Yes | Yes | Yes | Yes | Yes | Yes | Yes | - | Yes |
| | | Acid value (mg CH₃ONa/g) | | 10 | 10 | 10 | 2 | 15 | 25 | 10 | 10 | 10 | - | 10 |
| | | Aromatic vinyl monomer unit | Type | ST | ST | ST | ST | ST | ST | ST | ST | ST | - | ST |
| | | | Proportion (mass%; based on main chain) | 30 | 30 | 30 | 30 | 30 | 30 | 30 | 30 | 30 | - | 30 |
| | Polymer 2 | Type of polymer | | SBS | SBS | SBS | SBS | SBS | SBS | SIS | IR | SBS | SBS | - |
| | | Aliphatic conjugated diene monomer unit | Type | BT | BT | BT | BT | BT | BT | IP | IP | BT | BT | - |
| | | | Conjugated diene content (mass%) | 70 | 70 | 70 | 70 | 70 | 70 | 70 | 100 | 70 | 70 | - |
| | Proportion of polymer 1 (mass%; based on polymers 1 and 2) | | | 50 | 25 | 75 | 50 | 50 | 50 | 50 | 50 | 50 | 0 | 100 |
| Evaluation | Viscosity stability of slurry composition | | | A | B | A | B | A | A | A | A | D | D | A |
| | Peel strength of electrode | | | A | A | B | B | B | c | B | B | D | D | D |
| | Internal resistance of battery | | | A | A | B | A | B | B | A | A | D | D | D |

It can be seen from Table 1 that through the binder compositions of Examples 1 to 8 that each contained a polymer 1 that was a block polymer including an acidic group-containing monomer unit and a polymer 2 that included an aliphatic conjugated diene monomer unit in a proportion of 55 mass% or more but did not include an acidic group-containing monomer unit, and in each of which the proportion constituted by the polymer 1 relative to the total mass of the polymers 1 and 2 was not less than 10 mass% and not more than 90 mass%, it was possible to provide a slurry composition having excellent viscosity stability and an electrode having excellent peel strength.

On the other hand, it can be seen that it was not possible to provide both a slurry composition having excellent viscosity stability and an electrode having excellent peel strength in Comparative Examples 1 to 3, in each of which the number of types of polymers contained in a polymer particle was just one type.

### INDUSTRIAL APPLICABILITY

According to the present disclosure, it is possible to provide a binder composition for a non-aqueous secondary battery with which it is possible to form a slurry composition for a non-aqueous secondary battery electrode having excellent viscosity stability and an electrode for a non-aqueous secondary battery having excellent peel strength.

Moreover, according to the present disclosure, it is possible to provide a slurry composition for a non-aqueous secondary battery electrode that has excellent viscosity stability and can form an electrode for a non-aqueous secondary battery having excellent peel strength.

Furthermore, according to the present disclosure, it is possible to provide an electrode for a non-aqueous secondary battery that has excellent peel strength and a non-aqueous secondary battery that includes this electrode for a non-aqueous secondary battery.

## Claims

1. A binder composition for a non-aqueous secondary battery comprising polymer particles, wherein
the polymer particles contain a polymer 1 that is a block polymer including an acidic group-containing monomer unit and a polymer 2 that does not include an acidic group-containing monomer unit,
the polymer 1 constitutes a proportion of not less than 10 mass% and not more than 90 mass% based on total mass of the polymer 1 and the polymer 2, and
the polymer 2 includes either or both of an aliphatic conjugated diene monomer unit and an alkylene structural unit, and the aliphatic conjugated diene monomer unit and the alkylene structural unit constitute a total proportion of 55 mass% or more based on total mass of all repeating units included in the polymer 2.

2. The binder composition for a non-aqueous secondary battery according to claim 1, wherein
the polymer 1 includes a main chain that includes a block region formed of an aromatic vinyl monomer unit and a graft portion that is bonded to the main chain,
the aromatic vinyl monomer unit constitutes a proportion of not less than 10 mass% and not more than 50 mass% based on total mass of all repeating units included in the main chain, and
the acidic group-containing monomer unit is included in the graft portion.

3. The binder composition for a non-aqueous secondary battery according to claim 1 or 2, wherein the polymer 1 has an acid value of 0.5 mg CH₃ONa/g and not more than 30 mg CH₃ONa/g.

4. The binder composition for a non-aqueous secondary battery according to any one of claims 1 to 3, wherein the polymer 2 is a block polymer.

5. The binder composition for a non-aqueous secondary battery according to any one of claims 1 to 4, wherein the polymer 1 includes either or both of an aliphatic conjugated diene monomer unit and an alkylene structural unit.

6. The binder composition for a non-aqueous secondary battery according to any one of claims 1 to 5, wherein the acidic group-containing monomer unit of the polymer 1 is a carboxyl group-containing monomer unit.

7. A method of producing the binder composition for a non-aqueous secondary battery according to any one of claims 1 to 6, comprising:
a step of obtaining a preliminary mixture containing the polymer 1, the polymer 2, an organic solvent, an emulsifier, and water; and
a phase-inversion emulsification step of performing phase-inversion emulsification of the preliminary mixture.

8. A slurry composition for a non-aqueous secondary battery electrode comprising: an electrode active material; and the binder composition for a non-aqueous secondary battery according to any one of claims 1 to 6.

9. An electrode for a non-aqueous secondary battery comprising an electrode mixed material layer formed using the slurry composition for a non-aqueous secondary battery electrode according to claim 8.

10. A non-aqueous secondary battery comprising the electrode for a non-aqueous secondary battery according to claim 9.
